# EUROPÄISCHE PATENTSCHRIFT

(11) **EP 0 802 879 B1**
(45) Veröffentlichungstag und Bekanntmachung des Hinweises auf die Patenterteilung: **04.11.1998**
(21) Anmeldenummer: 96900285.6
(22) Anmeldetag: 13.01.1996
(51) Int. Cl.: B65G 53/46, B65D 88/68

(54) **VORRICHTUNG ZUM DOSIEREN VON SCHÜTTGUT**
DEVICE FOR METERING BULK MATERIAL
DISPOSITIF POUR DOSER DES PRODUITS EN VRAC

(30) Priorität: 17.01.1995 DE 19501179
(43) Veröffentlichungstag der Anmeldung: 29.10.1997
(73) Patentinhaber: ZEPPELIN SCHÜTTGUTTECHNIK GmbH, D-88250 Weingarten (DE)
(72) Erfinder: WILMS, Harald, D-88069 Tettnang (DE); VOGELSANG, Franz, Josef, D-88213 Ravensburg (DE)
(74) Vertreter: Otten, Herbert
(86) Internationale Anmeldenummer: DE9600072
(87) Internationale Veröffentlichungsnummer: WO9622241

(56) Entgegenhaltungen:
- DE-A- 3 102 847
- DE-A- 3 425 895

## Beschreibung

Die Erfindung betrifft eine Vorrichtung zum Dosieren von Schüttgut nach dem Oberbegriff des Anspruchs 1.

Als Dosiervorrichtung, mit deren Hilfe Schüttgüter aus einem Raum beliebig hohen Drucks in eine Förderleitung gegen einen darin herrschenden höheren oder niedrigeren Druck eingeschleust werden können, sind sogenannte Zellenradschleusen allgemein bekannt.

Das auf einer senkrechten Welle drehfest sitzende Zellenrad besteht aus einer Nabe und radialen Flügeln, die dementsprechend keil- oder trapezförmige Kammern begrenzen. Über die oberseitige Beschickungsöffnung gelangt das Schüttgut in mindestens eine Zellenradkammer und wird nach einer Drehung, beispielsweise um ca. 180°, gegebenenfalls unterstützt durch Druckluft, über eine Auslauföffnung in die Förderleitung aufgegeben. In der Regel steigt die auf diese Weise zu dosierte Schüttgutmenge mit zunehmender Drehzahl des Zellenrades zunächst an und nimmt bei weiterer Erhöhung der Drehzahl aufgrund der Zentrifugalkraft wieder ab. Probleme ergeben sich hierbei bei schwerfließenden, haftenden und brückenbildenden Schüttgütern, da die konstruktionsbedingten, relativ engen Einlaufquerschnitte einem kontinuierlichen Befüllen der Zellenradkammern entgegenstehen.

Weiterhin ist ein Massenfluß, d.h. ein gleichmäßiger Austrag über den gesamten Querschnitt des Vorratsbehälters erwünscht. Wird der in der Mitte des Behälters liegende Teil des Materials schneller entleert, als das Material im Wandbereich so kann es bei nicht vollständiger Entleerung und regelmäßigem Auffüllen des Vorratsbehälters dazu kommen, daß immer nur Material aus der Behältermitte entnommen wird und das Material im Randbereich alt wird.

Um hohe Dosierleistung auch für schwerfließende Schüttgüter zu erhalten und den gewünschten Massenfluß zu gewährleisten, ist man daher beispielsweise mit einer Dosiervorrichtung nach der DE 34 25 895 dazu übergegangen, mit dem Zellenrad ein sich durch die Beschickungsöffnung hindurch nach oben erstreckendes Rührwerk drehfest zu verbinden. Hierbei wurde die Dosierung schwerfließender Schüttgüter für bestimmte Dosierleistungen verbessert. Insbesondere bei niedrigerer Dosierleistung arbeitet jedoch ein derartiges Rührwerk nicht mehr zuverlässig.

Der Erfindung liegt daher die Aufgabe zugrunde, eine Dosiervorrichtung vorzuschlagen, die auch bei extrem schwer fließenden Schüttgütern insbesondere mit kleiner Dosierleistung, d.h. mit langsam drehendem Zellenrad, zuverlässig arbeitet.

Diese Aufgabe wird ausgehend von einer Vorrichtung zum Dosieren der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, daß zwei verschiedene, voneinander entkoppelte Antriebe für das Rührwerk und das Zellenrad vorhanden sind.

Auf diese Weise kann das Rührwerk mit einer Drehzahl betrieben werden, die von der Drehzahl des Zellenrades unabhängig ist. Die Drehzahl des Rührwerks kann insbesondere auf das Fließverhalten des jeweiligen Schüttgutmaterials abgestimmt werden. Zugleich ist es möglich, den gesamten Drehzahlbereich des Zellenrads, in dem eine Dosierung möglich ist, zur Steuerung der Dosierleistung anzufahren.

Typische Drehzahlen des Zellenrades liegen bei 30 bis 35 Umdrehungen pro Minute mit einem Regelbereich von 1 bis 15. Bei einer Drehzahl von 30 Umdrehungen pro Minute entspricht dieser Regelbereich einem Drehzahlintervall von 2 bis 30 Umdrehungen pro Minute. Insbesondere bei Anfahrvorgängen wird jedoch eine sehr viel geringere Dosierung benötigt, so daß auch Umdrehungszahlen von 2 Umdrehungen pro Minute angesteuert werden können. Bei derart niedrigen Umdrehungszahlen arbeitet jedoch ein Rührwerk nach dem Stand der Technik nicht mehr zuverlässig.

Die optimierte Drehzahl des Rührwerks zur Auflockerung und zum Erreichen optimaler Fließeigenschaften hängt stark vom jeweiligen Material ab. Ein typischer Wert liegt bei ca. 7 bis 8 Umdrehungen pro Minute.

Durch das erfindungsgemäße Vorsehen zweier verschiedener Antriebe kann nunmehr das Rührwerk unabhängig von der Zellenraddrehzahl betrieben werden. Hierdurch ist eine optimale Homogenisierung des Schüttguts unabhängig von der Dosierleistung zu erreichen. Durch die spezielle Anpassung der Drehzahl des Rührwerks kann gezielt eine materialspezifische Brückenbildung vor der Beschickungsöffnung des Zellenradgehäuses vermieden werden. Diese vorteilhafte Wirkung des Rührwerks kann unter Umständen durch eine spezielle geometrische Ausbildung des Rührwerks weiter verbessert werden.

Je nach Notwendigkeit können durch die Erfindung die Drehrichtungen des Rührwerks bzw. des Zellenrads auch gegenläufig eingestellt werden.

Vorteilhafterweise wird die Zellenradantriebswelle als Hohlwelle ausgebildet. Dies hat den Vorteil, daß durch die hohle Zellenradantriebswelle eine Rührwerksantriebswelle durchgeführt werden kann, wobei sich die Achsen beider Antriebswellen decken. Die Rührwerksantriebswelle kann hierbei in der hohlen Zellenradantriebswelle über entsprechende Drehlager, z.B. Kugellager, gelagert werden.

Die Nabe des Rührwerkes sowie deren Antriebswelle steht somit direkt über der Nabe und Antriebswelle des Zellenrades, so daß der Durchfluß des Schüttguts in die Beschickungsöffnung, d.h. in die Kammern des Zellenrades, durch diese Bauteile nicht gestört wird. Eine solche Störung wäre beispielsweise durch ein Rührwerkantrieb gegeben, bei dem das Rührwerk über ein Winkelgetriebe und eine quer zur Drehachse oberhalb des Zellenrads verlaufende Antriebswelle angetrieben würde.

Die Zellenradantriebswelle wiederum kann in dem Zellenradgehäuse gelagert werden, das hierzu vorzugsweise mit einem nach unten ragenden rohrförmigen Ansatz oder Lagerstutzen versehen ist.

In einer besonderen Ausführungsform wird am unteren Ende der Zellenradantriebswelle ein Getriebe angebracht. Auf diese Weise kann ein Drehmoment einer Antriebseinheit, beispielsweise eines Elektromotors, auf die Zellenradantriebswelle übertragen werden, deren Drehachse nicht mit der Drehachse der Zellenradantriebswelle in Deckung liegt.

Vorzugsweise wird hierzu ein Ketten- oder Riemengetriebe verwendet. Hierbei liegt am unteren Ende der Zellenradantriebswelle ein Zahnkranz oder eine Riemenscheibe. In den Zahnkranz oder in die Riemenscheibe wird sodann eine Kette bzw. ein Riemen eingelegt. Die Kette oder der Riemen läuft über ein quer von der Zellenradantriebswelle beabstandetes Kettenritzel oder über eine weitere Riemenscheibe, die mit einer parallel zur Zellenradantriebswelle stehenden Motorwelle verbunden sind.

Auf diese Weise läßt sich die Zellenradantriebswelle durch einen neben dem Zellenradgehäuse befindlichen Motor, dessen Motorwelle parallel zur Zellenradantriebswelle steht, antreiben. Denkbar wäre jedoch auch jede Form eines Winkelgetriebes, beispielsweise mit einem Kegelzahnrad und einem entsprechenden Zahnkranz an der hohlen Zellenradantriebswelle, so daß die Zellenradantriebswelle über eine quer zur Zellenradantriebswelle stehende Welle anzutreiben wäre.

In einer besonderen Ausführungsform wird für den Antrieb der Rührwerksantriebswelle ein Motor verwendet, dessen Motorgehäuse fest mit dem Zellenradgehäuse bzw. dem Lagerstutzen verbunden ist und der eine hohle Lagerhülse als Antriebswelle aufweist, in der die Rührwerksantriebswelle gehaltert und gelagert wird. Da das Motorgehäuse ortsfest fixiert ist und die Lagerhülse als Motorantriebswelle bereits drehbar gelagert ist, laßt sich durch Einstecken der Rührwerksantriebswelle in diese Lagerhülse zugleich eine Lagerung der Rührwerksantriebswelle und eine kraftschlüssige Verbindung mit der als Lagerhülse dienenden Antriebswelle bewirken. Hierbei kann der Kraftschluß zwischen Rührwerksantriebswelle und Lagerhülse beispielsweise über eine Klemmverbindung hergestellt werden.

Für ein konkretes Ausführungsbeispiel kommt auch der Einsatz eines einzigen Motors für den Antrieb sowohl der Zellenradantriebswelle als auch der Rührwerksantriebswelle in Betracht. Die getrennte Regelung des Antriebs könnte dann über ein sogenanntes Umlaufrädergetriebe mit Leistungsabzweigung erfolgen.

In einer besonderen Ausführungsform einer erfindungsgemäßen Vorrichtung wird ein Rührwerksgehäuse vorgesehen, das vom Zellenradgehäuse demontierbar ist. Hierdurch ist das Zellenrad nach Abnehmen des Rührwerksgehäuses bzw. nach dem Absenken des Zellenradgehäuses von oben her zugänglich.

Vorteilhafterweise wird die Rührwerksnabe so ausgebildet, daß sie auf das obere Ende der Rührwerksantriebswelle aufsteck- und/oder verschraubbar ist. Auf diese Weise kann beim Abnehmen des Rührwerksgehäuses das komplette Rührwerk mit entfernt werden. Hierdurch wird die Zugänglichkeit des Zellenrads bzw. der Zellenradkammer weiter verbessert.

Dies gilt insbesondere dann, wenn die Abdeckplatte, die oberhalb des Zellenrads vorgesehen ist, um wenigstens den Raum einer Kammer des Zellenrads zu überdecken, mit dem Rührwerksgehäuse fest verbunden ist, so daß diese mit dem Rührwerksgehäuse vom Zellenradgehäuse abgehoben wird. Ist das Rührwerk mit einer aufsteckbaren Nabe wie oben angeführt versehen, so kann das Rührwerksgehäuse komplett zusammen mit dieser Abdeckplatte abgehoben bzw. das Zellenradgehäuse und damit die gesamte Zellenradschleuse vom Rührwerksgehäuse abgesenkt werden, ohne daß das Rührwerk selbst mit seinen Schaufeln oder Flügeln im Wege steht.

Zur kraftschlüssigen oder formschlüssigen Verbindung der Rührwerksnabe mit der Rührwerksantriebswelle empfiehlt sich hierbei die Verwendung wenigstens einer Paßfeder, die in einem entsprechenden achsparallelen Schlitz der Rührwerksantriebswelle sitzt. An der Innenseite einer Aufnahmebohrung der Rührwerksnabe zur Aufnahme der Rührwerksantriebswelle sind dabei entsprechend ebenfalls achsparallele Nuten vorzusehen, in die die Paßfedern beim Aufstecken der Rührwerksnabe in axialer Richtung hineingleiten können.

Ein Ausführungsbeispiel der Erfindung ist in der Zeichnung dargestellt und wird nachfolgend anhand der Figuren näher erläutert.

Im einzelnen zeigen
- Fig. 1: einen Querschnitt durch eine erfindungsgemäße Vorrichtung zum Dosieren in zusammengebauten Zustand,
- Fig. 2: eine Vorrichtung gemäß Fig. 1 mit abgesenkter Zellenradschleuse und
- Fig. 3: eine Ausschnittsvergrößerung nach Lagerung der beiden Antriebswellen.

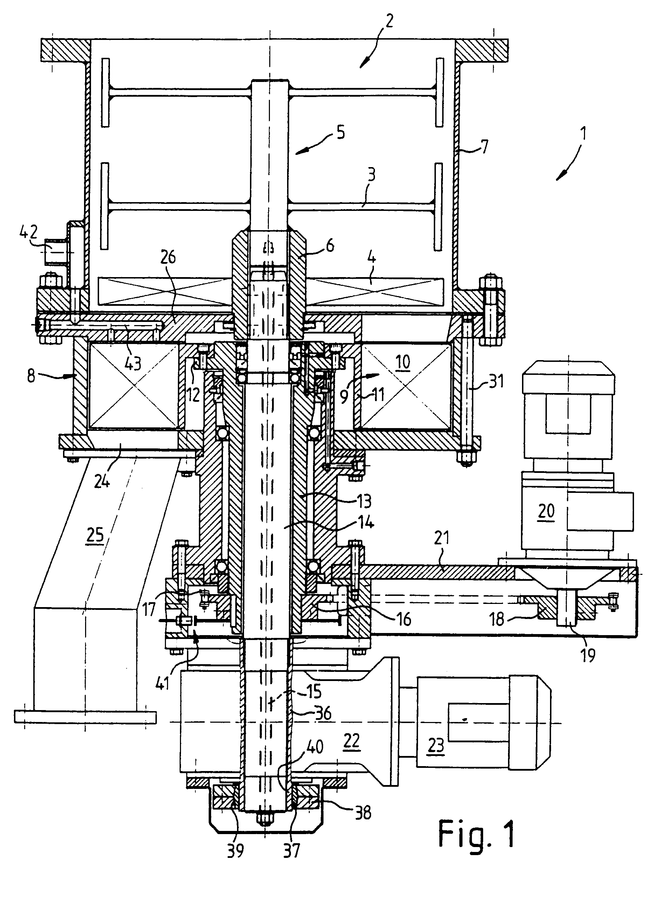

Die Dosiervorrichtung 1 gemäß Fig. 1 weist ein Rührwerk 2 mit Rührflügeln 3, Rührschaufeln 4 sowie einer Rührwerksnabe 5 auf. Die Rührwerksnabe 5 ist am unteren Ende mit einer Aufnahmebohrung 6 versehen. Das gesamte Rührwerk 2 befindet sich in einem Rührwerksgehäuse 7. Vorliegend ist das Rührwerksgehäuse 7 zylinderförmig dargestellt. Es wäre jedoch ohne weiteres auch eine konische Form mit entsprechend angepaßtem Rührwerk 2 denkbar. Der Entladebereich der Vorratssilos ist meist ebenfalls konisch, so daß ein solches konusförmiges Rührwerksgehäuse 7 an den Entladebereich des Vorratssilos angepaßt wäre.

Unterhalb des Rührwerksgehäuse 7 schließt sich ein Zellenradgehäuse 8 an. Innerhalb des Zellenradgehäuses 8 befindet sich ein Zellenrad 9 mit Zellenflügeln 10, die an einer Zellenradfelge 11 befestigt sind. Die Zellenradfelge 11 ist an einem Ringansatz 12 einer Zellenradantriebswelle 13 befestigt, d. h. im vorliegenden Fall verschraubt.

Im Innern der Zellenradantriebswelle 13 befindet sich eine ebenfalls als Hohlwelle ausgebildete Rührwerksantriebswelle 14. Durch das Innere der Rührwerksantriebswelle 14 erstreckt sich eine Befestigungsstange 15, mittels der die Rührwerksnabe 5 auf die Rührwerksantriebswelle 14 zu befestigen, z.B. zu verschrauben ist.

Am unteren Ende der Zellenradantriebswelle 13 ist ein Zahnkranz 16 aufgesetzt, über den eine Kette 17 gelegt ist. Die Kette 17 ist weiterhin über ein Kettenritzel 18 gelegt, das an der Motorwelle 19 eines Motors 20 befestigt ist. Der Motor 20 wird über eine Motorflanschplatte 21 fixiert.

Die Rührwerksantriebswelle 14 wird über ein Getriebe 22 und den Motor 23 betrieben.

Am Zellenradgehäuse 8 befindet sich unterhalb einer Auslaßöffnung 24 ein Auslaßstutzen 25 der zur Verbindung der Auslaßöffnung 24 mit einer nicht dargestellten Förderleitung dient. Oberhalb der Auslaßöffnung 24 ist auf der Oberseite des Zellenrads 9 eine Abdeckplatte 26 angebracht, die mindestens eine Kammer des Zellenrads 9 abschließt, so daß die Funktion einer Zellenradschleuse gewährleistet ist.

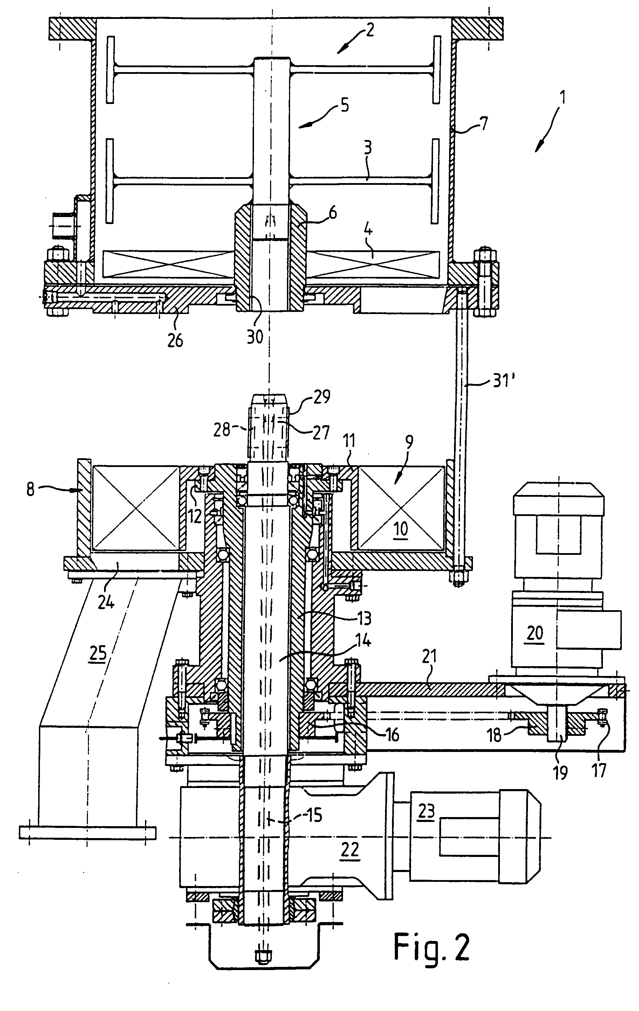

In der Darstellung gemaß Fig. 2 ist das Zellenradgehäuse 8 vom Rührwerksgehäuse 7 abmontiert und nach unten abgesenkt. Dabei wird deutlich, daß das obere Ende 27 der Rührwerksantriebswelle 14 mit achsparallelen Nuten 28 versehen ist, in die Paßfedern 29 eingesteckt sind. In der Aufnahmebohrung 6 der Rührwerksnabe 5 sind entsprechende Aufnahmenuten 30 vorgesehen, in die die Paßfedern 29 beim Aufstecken des Rührwerks auf das obere Ende 27 der Rührwerksantriebswelle 14 hineingleiten, so daß eine kraftschlüssige Verbindung bezüglich einer Drehbewegung hergestellt wird.

Durch diese Ausgestaltung der Rührwerksnabe 5 und der Rührwerksantriebswelle 14 ist es möglich, das Rührwerksgehäuse 7 mit befestigter Abdeckplatte 26 vom Zellenradgehäuse 8 mitsamt dem Rührwerk 2 abzuheben. Das Zellenrad 9 ist hierdurch besonders gut zugänglich. Die Montage des Rührwerks 2 kann durch einfaches Aufsetzen des Rührwerksgehäuses 7 auf das Zellenradgehäuse 8 bewirkt werden.

Die Verbindung zwischen Rührwerksgehäuse 7 und Zellenradgehäuse 8 kann beispielsweise über Stiftschrauben 31 bewerkstelligt werden. Durch die Verwendung verlängerter Stiftschrauben 31' kann das Zellenradgehäuse auch in abgesenkter Stellung am Rührwerksgehäuse 7 aufgehängt werden, wobei das Zellenradgehäuse 8, z.B. zur Säuberung, Wartung oder Reparatur von oben zugänglich ist.

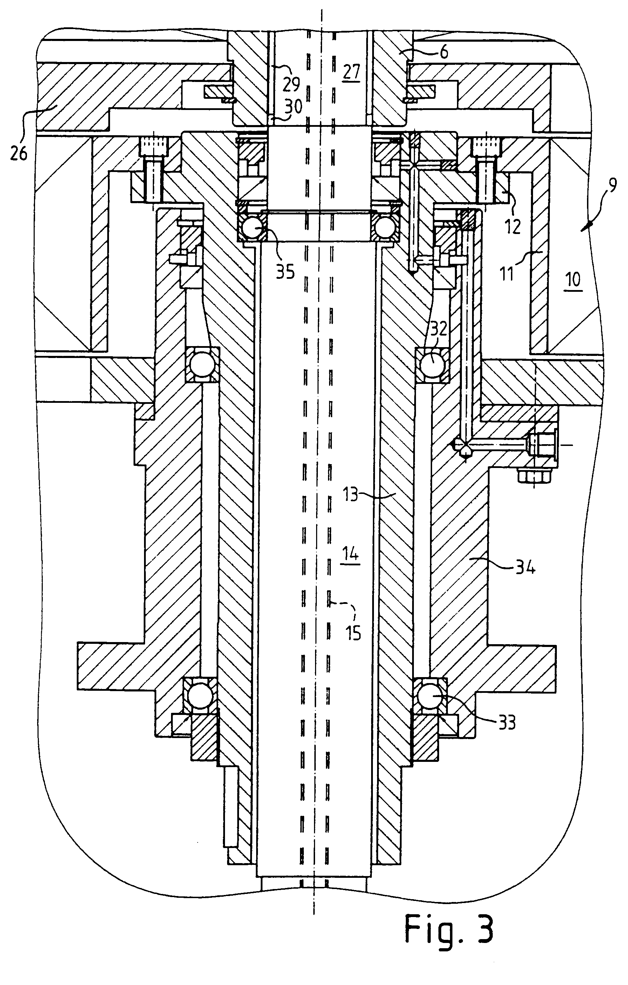

In der Darstellung gemäß Fig. 3 ist die besondere Lagerung der beiden Antriebswellen 13, 14 genauer dargestellt. Diese umfaßt ein oberes 32 und ein unteres 33 Kugellager, mittels denen die hohle Zellenradantriebswelle 13 in einem rohrförmigen, am Zellenradgehäuse 8 befestigten Lagerstutzen 34 drehbar gelagert ist. Ebenso ist in dieser Darstellung das obere Kugellager 35 erkennbar, mittels dem die Rührwerksantriebswelle 14 im Innern der Zellenradantriebswelle 13 drehbar gelagert ist.

Das Getriebe 22 weist eine als hohle Lagerhülse 36 ausgebildete Antriebswelle auf. In diese Lagerhülse 36 ist die Rührwerksantriebswelle 14 eingesteckt. Auf der Unterseite des Getriebes 22 befindet sich ein Klemmring 37 dessen Profil die Form eines Doppelkeils aufweist. Dieser Klemmring 37 wird von zwei ringförmigen Quetschscheiben 38 eingeschlossen, deren innere Umfangsfläche 39 abgeschrägt und somit dem Doppelkeilprofil des Klemmrings 37 angepaßt sind. Durch Zusammendrücken der beiden Quetschscheiben 38 in vertikaler Richtung wird dadurch der Klemmring 37 radial nach innen zusammengedrückt, wodurch das untere Ende 40 mit der Rührwerksantriebswelle 14 verklemmt wird. Hierdurch ist die Rührwerksantriebswelle 14 an ihrem unteren Ende zugleich drehbar gelagert als auch kraftschlüssig mit dem Motor 23 verbunden.

Weiterhin umfaßt eine Dosiervorrichtung gemäß dem vorliegenden Ausführungsbeispiel einen Taktgeber 41, sowie einen Spülluftanschluß 42 und eine Druckluftzuleitung 43.

Durch die beschriebene Art der Lagerung sind die Zellenradantriebswelle 13 und die Rührwerksantriebswelle unabhängig voneinander drehbar innerhalb des Lagerstutzens 34 gelagert. Hierdurch kann das Rührwerk 2 unabhängig von der Rotation des Zellenrads 9 bewegt werden. Der Antrieb des Rührwerks 2 wird hierbei über die Rührwerksantriebswelle 14, das Winkelgetriebe 22 und den Motor 23 bewerkstelligt. Davon abgekoppelt findet die Drehbewegung des Zellenrades 9 mittels der Zellenradantriebswelle 13 sowie des Kettenantriebs 16, 17, 18 über den Motor 20 statt. Die Drehzahl des Zellenrades kann hierbei über den Taktgeber 41 gemessen und zur Regelung der Dosierleistung verwendet werden.

Durch den Spülluftanschluß 42 kann die Zusammensetzung aus festem Schüttgut und Gasanteil verändert und kalibriert werden. Diese Zusammensetzung muß für optimale Förder- und Dosierergebnisse bestimmte Werte aufweisen. Über die Druckluftzuleitung 43 kann Druckluft in den Entladebereich der Zellenradkammern geblasen werden, um die Entladung zu beschleunigen.

Mit einer Dosiervorrichtung der beschriebenen Art ist auch bei schwer fließfähigem Schüttgut, aufgrund des unabhängigen Betriebs des Rührwerks 2 bei sehr verschiedenen Dosierleistungen, insbesondere auch bei extrem langsamen Drehungen des Zellenrades 9, eine zuverlässige Funktion hinsichtlich einer guten Homogenisierung des Schüttguts bei gleichzeitiger Vermeidung von Brückenbildung gewährleistet. Die oberen Flügel 3 des Rührwerks dienen hierbei vorwiegend der guten Homogenisierung des Schüttgutes, während die unteren Schaufeln 4 vorwiegend eine gleichmäßige Entnahme über den gesamten Querschnitt bewirken.
- 1: Dosiervorrichtung
- 2: Rührwerk
- 3: Rührflügel
- 4: Rührschaufeln
- 5: Rührwerksnabe
- 6: Aufnahmebohrung
- 7: Rührwerksgehäuse
- 8: Zellenradgehäuse
- 9: Zellenrad
- 10: Zellenflügel
- 11: Zellenradfelge
- 12: Ringansatz
- 13: Zellenradantriebswelle
- 14: Rührwerksantriebswelle
- 15: Befestigungsstange
- 16: Zahnkranz
- 17: Kette
- 18: Kettenritzel
- 19: Motorwelle
- 20: Motor
- 21: Motorflanschplatte
- 22: Getriebe
- 23: Motor
- 24: Auslaßöffnung
- 25: Auslaßstutzen
- 26: Abdeckplatte
- 27: oberes Ende
- 28: Nuten
- 29: Paßfeder
- 30: Aufnahmenuten
- 31: Befestigungsbolzen
- 32: Kugellager
- 33: Kugellager
- 34: Lagerstutzen
- 35: oberes Kugellager
- 36: Lagerhülse
- 37: Klemmring
- 38: Quetschscheiben
- 39: innere Umfangsfläche
- 40: unteres Ende
- 41: Taktgeber
- 42: Spülluftanschluß
- 43: Druckluftzuleitung

## Patentansprüche

1. Vorrichtung (1) zum Dosieren von Schüttgut in mindestens eine Förderleitung mit einem, um eine senkrechte Achse drehbaren Zellenrad (9) in einem Zellenradgehäuse (8) mit einer Auslaßöffnung (24) zum Anschluß an die Förderleitung, wobei oberseitig des Gehäuses (8) eine Beschickungsöffnung zur Schwerkraftbeschickung mit dem zu fördernden Schüttgut vorhanden ist und oberhalb des Zellenrades eine Abdeckplatte (26) vorgesehen ist, die mindestens den Raum einer Kammer des Zellenrades (9) überdeckt, und wobei ein oberhalb des Zellenrades (9) angeordnetes Rührwerk (2) vorhanden ist und die Achse des Rührwerks (2) senkrecht und koaxial zur Zellenradachse liegt, dadurch gekennzeichnet, daß zwei verschiedene, voneinander entkoppelte Antriebe (14, 22, 23) bzw. (13, 16, 17, 18, 20) für das Rührwerk (2) und das Zellenrad (9) vorhanden sind.

2. Vorrichtung nach Anspruch 1, dadurch gekennzeichnet, daß die Zellenradantriebswelle (13) als Hohlwelle ausgebildet ist.

3. Vorrichtung nach Anspruch 2, dadurch gekennzeichnet, daß die Rührwerksantriebswelle (14) durch die hohle Zellenradantriebswelle (13) durchgeführt ist.

4. Vorrichtung nach Anspruch 2 oder 3, dadurch gekennzeichnet, daß die Rührwerksantriebswelle (14) in der Zellenradantriebswelle (13) drehbar gelagert ist und/oder die Zellenradantriebswelle (13) in einem rohrförmigen, mit dem Zellenradgehäuse (8) verbundenen Lagerstutzen (34) drehbar gelagert ist.

5. Vorrichtung nach einem der vorhergehenden Ansprüche, dadurch gekennzeichnet, daß ein Getriebe am unteren Ende der Zellenradantriebswelle (13) vorhanden ist.

6. Vorrichtung nach Anspruch 5, dadurch gekennzeichnet, daß das Getriebe ein Ketten- oder Riemengetriebe (16, 17, 18) ist.

7. Vorrichtung nach einem der vorhergehenden Ansprüche, dadurch gekennzeichnet, daß ein Motor mit einem Motorgehäuse und einer hohlen Lagerhülse (36) als Antriebswelle für das Zellenrad (9) vorgesehen ist, wobei das Motorgehäuse ortsfest mit dem Zellenradgehäuse bzw. dem Lagerstutzen (34) verbunden ist und die Rührwerksantriebswelle (14) in dieser Lagerhülse (36) gehaltert und gelagert ist.

8. Vorrichtung nach einem der vorhergehenden Ansprüche, dadurch gekennzeichnet, daß das Rührwerksgehäuse (7) vom Zellenradgehäuse (8) demontierbar ist.

9. Vorrichtung nach einem der vorhergehenden Ansprüche, dadurch gekennzeichnet, daß die Rührwerksnabe (5) auf eine Rührwerksantriebswelle (14) aufsteck- und/oder verschraubbar ist.

10. Vorrichtung nach Anspruch 9, dadurch gekennzeichnet, daß wenigstens eine Paßfeder (29) zur kraftschlüssigen Verbindung zwischen Rührwerksantriebswelle (14) und Rührwerksnabe (5) vorhanden sind.

## Claims

1. An apparatus (1) which is intended for metering bulk material into at least one conveying line and has a cell wheel (9) which can be rotated around a vertical axis and is located in a cell-wheel housing (8) with an outlet opening (24) for connection to the conveying line, there being provided, at the top of the housing (8), a charging opening for the gravitational charging with the bulk material which is to be conveyed and, above the cell wheel, a covering plate (26) which covers over at least the area of one chamber of the cell wheel (9), and there being a stirrer (2), which is arranged above the cell wheel (9), and the axis of the stirrer (2) being vertical and coaxial with the cell wheel axis, wherein two different, isolated drives (14, 22, 23) and (13, 16, 17, 18, 20) are respectively provided for the stirrer (2) and the cell wheel (9).

2. The apparatus as claimed in claim 1, wherein the cell-wheel drive shaft (13) is designed as a hollow shaft.

3. The apparatus as claimed in claim 2, wherein the stirrer drive shaft (14) is routed through the hollow cell-wheel drive shaft (13).

4. The apparatus as claimed in claim 2 or 3, wherein the stirrer drive shaft (14) is mounted rotatably in the cell-wheel drive shaft (13) and/or the cell-wheel drive shaft (13) is mounted rotatably in a tubular bearing stub (34) which is connected to the cell-wheel housing (8).

5. The apparatus as claimed in one of the preceding claims, wherein a gear mechanism is provided at the bottom end of the cell-wheel drive shaft (13).

6. The apparatus as claimed in claim 5, wherein the gear mechanism is a chain mechanism or belt mechanism (16, 17, 18).

7. The apparatus as claimed in one of the preceding claims, wherein a motor with a motor housing and a hollow bearing sleeve (36) is provided as the drive shaft for the cell wheel (9), the motor housing being connected fixedly to the cell-wheel housing or the bearing stub (34), and the stirrer drive shaft (14) being retained and mounted in said bearing sleeve (36).

8. The apparatus as claimed in one of the preceding claims, wherein the stirrer housing (7) can be removed from the cell-wheel housing (8).

9. The apparatus as claimed in one of the preceding claims, wherein a stirrer hub (5) can be plugged and/or screwed onto a stirrer drive shaft (14).

10. The apparatus as claimed in claim 9, wherein there is provided at least one adjusting spring (29) for the frictionally locking connection between the stirrer drive shaft (14) and stirrer hub (5).

## Revendications

1. Dispositif (1) destiné au dosage de produits en vrac dans au moins une conduite de transport, comportant une roue alvéolaire (9) pouvant tourner autour d'un axe vertical, disposée dans un carter (8) de roue alvéolaire qui est muni d'un orifice de sortie (24) destiné au raccordement à la conduite de transport, un orifice d'alimentation étant prévu en partie supérieure du carter (8) pour alimenter par gravité le produit en vrac à transporter, et une plaque de recouvrement (26) étant prévue au-dessus de la roue alvéolaire, qui recouvre l'espace d'au moins une chambre de la roue alvéolaire (9), un malaxeur (2) disposé au-dessus de la roue alvéolaire (9) étant prévu, et l'axe du malaxeur (2) étant vertical et coaxial à l'axe de la roue alvéolaire, caractérisé en ce qu'on prévoit pour le malaxeur (2) et la roue alvéolaire (9) deux différents entraînements (14, 22, 23) ou (13, 16, 17, 18, 20), qui sont découplés l'un de l'autre.

2. Dispositif selon la revendication 1, caractérisé en ce que l'arbre d'entraînement (13) de la roue alvéolaire est réalisé sous la forme d'un arbre creux.

3. Dispositif selon la revendication 2, caractérisé en ce que l'arbre d'entraînement (14) du malaxeur passe par l'arbre d'entraînement creux (13) de la roue alvéolaire.

4. Dispositif selon la revendication 2 ou 3, caractérisé en ce que l'arbre d'entraînement (14) du malaxeur est logé en rotation dans l'arbre d'entraînement (13) de la roue alvéolaire, et/ou en ce que l'arbre d'entraînement (13) de la roue alvéolaire est logé en rotation dans une tubulure de logement (34) tubulaire qui est reliée au carter (8) de la roue alvéolaire.

5. Dispositif selon l'une quelconque des revendications précédentes, caractérisé en ce qu'une transmission est prévue sur l'extrémité inférieure de l'arbre d'entraînement (13) de la roue alvéolaire.

6. Dispositif selon la revendication 5, caractérisé en ce que la transmission est une transmission à chaîne ou à courroie (16, 17, 18).

7. Dispositif selon l'une quelconque des revendications précédentes, caractérisé en ce qu'un moteur comportant un carter de moteur et une douille de palier creuse (36) est prévu en tant qu'arbre d'entraînement de la roue alvéolaire (9), le carter du moteur étant relié solidairement au carter de la roue alvéolaire ou à la tubulure de logement (34), et l'arbre d'entraînement (14) du malaxeur étant retenu et logé dans cette douille de palier (36).

8. Dispositif selon l'une quelconque des revendications précédentes, caractérisé en ce que le carter (7) du malaxeur peut être démonté du carter (8) de la roue alvéolaire.

9. Dispositif selon l'une quelconque des revendications précédentes, caractérisé en ce que le moyeu (5) du malaxeur peut être emboîté et/ou vissé sur un arbre d'entraînement (14) de malaxeur.

10. Dispositif selon la revendication 9, caractérisé en ce qu'on prévoit au moins une clavette parallèle (29) destinée à la liaison par adhérence de force entre l'arbre d'entraînement (14) du malaxeur et le moyeu (5) du malaxeur.
